# EUROPÄISCHE PATENTSCHRIFT

(11) **EP 1 464 529 B1**
(45) Veröffentlichungstag und Bekanntmachung des Hinweises auf die Patenterteilung: **03.06.2009**
(21) Anmeldenummer: 04101189.1
(22) Anmeldetag: 23.03.2004
(51) Int. Cl.: B60K 15/05

(54) **Kraftstoffbehälterverschluss**
Fuel tank closure
Obturateur de réservoir de carburant

(30) Priorität: 04.04.2003 DE 10315513
(43) Veröffentlichungstag der Anmeldung: 06.10.2004
(73) Patentinhaber: Temtec Fahrzeugtechnik Entwicklungsgesellschaft mbH, D-83064 Raubling (DE)
(72) Erfinder: Bauer, Angelika Barbara Maria, 83064 Raubling (DE)
(74) Vertreter: Kehl, Günther

(56) Entgegenhaltungen:
- DE-A- 19 517 542
- US-A- 5 072 986
- US-A- 5 465 861

## Beschreibung

Die Erfindung betrifft einen Kraftstoffbehälterverschluss zum Verschließen eines Einfüllkanals mit einem Verschlussteil, das zwischen einer Schließposition, in der eine Öffnung des Einfüllkanals dicht verschlossen ist, und einer Öffnungsposition durch eine Schwenkbewegung um eine Schwenkachse beweglich ist, wobei in der Öffnungsposition der Einfüllkanal zur Befüllung eines Kraftstoffbehälters freigegeben ist und das Verschlußteil durch eine einen Motor aufweisende Antriebseinheit angetrieben ist.

Unter "oben" ist im folgenden der Bereich des Kraftstoffbehälterverschlusses zu verstehen, der nahe an der Öffnung liegt, in die die Zapfpistole eingeführt wird. Entsprechend ist unter "unten" der Bereich zu verstehen, der näher bei dem Kraftstoffbehälter liegt.

Ein Kraftstoffbehälterverschluss der eingangs genannten Art ist aus der DE 195 17 542 A bekannt. Bei dem bekannten Kraftstoffbehälterverschluss ist ein üblicher Schraubdeckel in einem Deckelhalter gelagert und zwar so, dass er innerhalb des Deckelhalters um seine eigene Achse drehbar und in Axialrichtung verschiebbar ist. Der Deckelhalter selbst ist schwenkbar gelagert. Die Drehachse des Drehlagers liegt seitlich zu dem Einfüllstutzen und erstreckt sich in Tangentialrichtung. Eine Schneckenwelle liegt koaxial zur Drehachse des Drehlagers und kämmt mit einem Gewinde an der Außenwand des Schraubdeckels. Wenn der Schraubdeckel in den Einfüllstutzen eingeschraubt ist und wenn das Schneckengewinde angetrieben wird, wird der Schraubdeckel um seine eigene Achse gedreht, so dass er sich aus dem Schraubgewinde des Einfüllstutzens entfernt. Die Drehung des Deckels um seine eigene Achse wird nach einigen Umdrehungen durch einen Anschlag gehemmt, so dass nach Durchführung von einigen Drehungen der Deckelhalter als Ganzes um seine Drehlagerachse geschwenkt wird und der Deckelhalter einschließlich des Deckels zur Seite gekippt wird, um den Einfüllstutzen zur Einführung einer Zapfpistole freizugeben.

Aus der US-A-5 465 861 ist ein Verschluss bekannt, der dadurch geöffnet wird, dass eine Nase durch Einführen einer Zapfpistole gegen die Wirkung einer Rückstellfeder bewegt wird und diese Bewegung auf das Verschlussteil zum Öffnen desselben übertragen wird. Nach dem Betanken und dem Zurückziehen der Zapfpistole wird der Verschluss durch die gespannte Rückstellfeder geschlossen.

Der Erfindung liegt die Aufgabe zugrunde, einen Kraftstoffbehälterverschluss der eingangs genannten Art zu schaffen, der sich durch gesteigerten Bedienungskomfort und besondere Betriebssicherheit auszeichnet. Insbesondere soll der Kraftstoffbehälterverschluss auch zur automatischen Betankung geeignet sein. Gleichzeitig soll der Kraftstoftbehälterverschluss auf einfache Weise gegen unbefugte Betätigung gesichert sein.

Die Lösung dieser Aufgabe ist in den unabhängigen Ansprüchen 1 und 2 angegeben.

Besonders vorteilhaft hat sich in diesem Zusammenhang ein Verschlussteil erwiesen, das in der Schließposition auf dem Rand der Öffnung dichtend aufsitzt und in der Öffnungsposition in Bezug auf den Einfüllkanal seitlich verschwenkt ist. Bei dieser Bauweise ist gewährleistet, dass kein Schmutz, der sich auf dem geschlossenen Verschluss angesammelt hat, beim Öffnen des Verschlusses in den Kraftstofftank gelangen kann. Vielmehr wird dieser zusammen mit der Verschlusskappe zur Seite bewegt.

Durch eine Zwangsführung wird gemäß einer vorteilhaften Ausgestaltung der Erfindung erreicht, dass das Verschlussteil beim Öffnungsvorgang in annähernd axialer Richtung von dem Rand der Öffnung abhebt und anschließend um eine quer zur Längsrichtung des Einfüllkanals liegende (virtuelle) Schwenkachse seitlich geschwenkt wird. Diese Art der Zwangsführung hat sich in Verbindung mit einem Motorantrieb als sehr zuverlässiger Öffnungs- und Schließmechanismus erwiesen.

Nach einer vorteilhaften Ausgestaltung der Erfindung ist die Zwangsführung mindestens eine Kulissenführung, die zwei komplementäre Teile, nämlich einerseits mindestens eine Nut und andererseits mindestens einen in die Nut eingreifenden Zapfen aufweist.

Zur Übertragung der Antriebsbewegung des Motors auf das Verschlussteil hat sich eine Bauform als vorteilhaft erwiesen, die einzeln oder in Kombination folgende Merkmale aufweist:
- die mindestens eine Nut weist jeweils einen in Axialrichtung geradlinig verlaufenden Abschnitt und einen an den geradlinig verlaufenden Abschnitt anschließenden bogenförmigen Abschnitt auf;
- das Verschlußteil weist eine auf den Rand der Öffnung passende Kappe und eine oder zwei seitlich an der Kappe angeordnete Streben auf;
- an der Strebe oder an den Streben ist ein Kraftaufnahmeteil angeordnet, auf das Kräfte in Axialrichtung zum Schließen und Öffnen des Kraftstoffbehälterverschlusses ausübbar sind;
- das Kraftaufnahmeteil ist mit einem axial beweglichen Schubring gekoppelt;
- das Kraftaufnahmeteil ist ein Zapfen, der in eine Ausnehmung des axial beweglichen Schubringes eingreift, derart dass das Verschlussteil schwenkbar an dem Schubring angelenkt ist
- der Schubring weist ein Gewinde auf, derart dass er in axialer Richtung bewegbar ist.

Diese Bauform weist den Vorteil auf, dass die Öffnungsbewegung des Verschlussteils so geführt ist, dass das Verschlussteil vom Rand der Öffnung nur minimal angehoben und danach seitlich verschwenkt wird, so dass der benötigte Raum vor der Öffnung klein gehalten werden kann. Dies ist besonders bei Personenkraftwagen von Bedeutung, bei denen der Kraftstoffeinfüllstutzen in der Regel in einer Tankmulde angeordnet ist, die durch eine Karosserieaussenklappe zugedeckt werden kann.

Falls die räumlichen Begrenzungen nicht so strikt sind, kann mit Vorteil auch ein Kraftstoffbehälterverschluss eingesetzt werden, bei dem zur Übertragung der Antriebsbewegung des Motors auf das Verschlussteil einzeln oder in Kombination folgende Merkmale vorgesehen sind:
- die Zwangsführung weist Mittel auf, durch die ein erster Randabschnitt des Verschlussteils gelenkig in der Nähe der Position festgelegt ist, die er in der Schließposition einnimmt, während ein dem ersten Randabschnitt gegenüberliegender zweiter Randabschnitt frei beweglich ist und beim Öffnen und Schließen um den ersten Randabschnitt geschwenkt wird;
- die Zwangsführung weist ein Gelenkteil auf, das einerseits an dem Verschlussteil und andererseits an dem Gehäuseteil angelenkt ist;
- das Gelenkteil ist ein Drahtbügel, der einerseits in einem an dem Gehäuseteil angeordneten Scharnier gelagert und andererseits in mindestens einer an dem Verschlussteil angeordneten Bohrung gelagert ist, wobei die Achsen des Scharniers und der mindestens einen Bohrung parallel sind.

Nach einer besonders vorteilhaften Ausgestaltung der Erfindung ist die Antriebseinheit mit einem Schlüssel antreibbar. Somit kann bei einer Störung der Stromversorgung der Kraftstoffbehälterverschluss auch manuell geöffnet und geschlossen werden. Eine Person, die nicht im Besitz des passenden Schlüssels ist, kann den Kraftstoffbehälterverschluss wegen der Selbsthemmung des Antriebs jedoch nicht betätigen.

Die Antriebswelle des Motors liegt vorzugsweise parallel zu der Achse des Einfüllkanals. Diese Bauweise hat sich nicht nur als besonders platzsparend erwiesen, sondern dank dieser Bauweise kann auch ein Schneckengetriebe vermieden werden, das eine so starke Selbsthemmung aufweist, dass ein manueller Antrieb nur an der Motorwelle möglich wäre. Wegen der starken Untersetzung wären jedoch zur Betätigung des Kraftstoffbehälterverschlusses eine solch große Anzahl von Umdrehungen zum Öffnen oder Schließen des Kraftstoffbehälterverschlusses erforderlich, dass diese Möglichkeit praktisch ausscheidet. Mit der erfindungsgemäßen Bauweise kann dagegen ein Rad der Antriebseinheit für die manuelle Notöffnung ausgewählt werden, bei dem sowohl das aufzubringende Drehmoment als auch die Anzahl der erforderlichen Umdrehungen in erträglichen Grenzen gehalten werden können.

Zur Übertragung der Antriebsbewegung der Antriebseinheit auf den Schubring und auf das Verschlussteil ist vorteilhafterweise ein mit einem Gewinde versehenes, um seine Längsachse drehbares Rohrstück vorgesehen, das den Schubring umgibt und mit einem Gewinde des Schubrings zusammenwirkt, um den Schubring in axialer Richtung zu bewegen.

Nach einer besonders erfinderischen Weiterbildung ist das Verschlussteil des Kraftstoffbehälterverschlusses mit einer Karosserie-Außenklappe derart gekoppelt, dass beim Öffnen des Verschlussteils die Außenklappe ebenfalls geöffnet wird. Dies ist nicht nur sehr bequem für den Fahrer des Kraftfahrzeugs, sondern macht die Erfindung auch geeignet für die in nicht allzu ferner Zukunft einzuführende automatische Betankung, da der Tankautomat von der Aufgabe des Öffnens und Schließens der Außenklappe und des Kraftstoffbehälterverschlusses entlastet ist und somit im Gegensatz zu derzeit bestehenden Planungen stark vereinfacht ausgeführt werden kann. Für das Öffnen und Schließen der Außenklappe, das Öffnen und Schließen des Kraftstoffbehälterverschlusses und das Entriegeln und Verriegeln des Zugangs zum Tankinnern ist nur ein einziger Motor erforderlich. Der zusätzliche Aufwand am Fahrzeug ist daher gering, vor allem wenn man bedenkt, dass moderne Fahrzeuge auch jetzt schon mit einem Motor zum Verriegeln und Entriegeln der Außenklappe ausgerüstet sind, der beim Einsatz der erfindungsgemäßen Lösung entfallen kann.

Die mechanische Kopplung zwischen dem Verschlussteil des Kraftstoffbehälterverschlusses mit der Außenklappe kann vorteilhafterweise dadurch geschehen, dass das Verschlussteil mit einem in eine Führung der Außenklappe eingreifenden Vorsprung versehen wird.

Die Bedienung des Kraftstoffbehälterverschlusses kann beispielsweise über einen elektrischen Taster erfolgen, der über die Außenklappe betätigbar ist. Vorteilhafterweise wird der Taster so geschaltet, dass er nur bei entriegelter Zentralverriegelung, also bei stillstehendem und nicht abgesperrtem Fahrzeug, wirksam betätigt werden kann.

Eine Ansteuerung des Antriebs des Kraftstoffbehälterverschlusses über eine Fernsteuerung oder einen Schalter im Fahrzeuginnern hat ebenfalls Vorteile.

Die Erfindung wird im folgenden anhand eines in den Figuren schematisch dargestellten Ausführungsbeispiels näher erläutert:
Figur 1 zeigt einen Kraftstoffbehälterverschluss gemäß der Erfindung mit geöffnetem Verschlussteil in der Draufsicht,
Figur 2 zeigt einen Schnitt längs der Schnittlinie II-II aus Figur 1,
Figur 3 zeigt einen Schnitt längs der Schnittlinie III-III aus Figur 1, wobei einige Teile aus Gründen der Übersichtlichkeit der Darstellung weggelassen sind,
Figur 3a zeigt eine Teilansicht einer Ausführungsvariante,
Figur 4 zeigt einen Schnitt längs der Schnittlinie IV-IV aus Figur 1,
Figur 5 zeigt einen Kraftstoffbehälterverschluss gemäß der Erfindung mit geschlossenem Verschlussteil in Seitenansicht,
Figur 6 zeigt den Kraftstoffbehälterverschluss wie in Figur 1 mit geöffnetem Verschlussteil in Seitenansicht,
Figur 7 zeigt, schematisch vereinfacht, einen Schnitt durch den Bereich eines Kraftfahrzeugkarosserieteils, in dem der Kraftstoffeinfüllstutzen (nicht gezeigt) angeordnet ist, wobei die Außenklappe geschlossen ist,
Figur 8 zeigt den gleichen Bereich bei teilweise geöffneter Außenklappe,
Figur 9 zeigt den gleichen Bereich bei vollständig geöffneter Außenklappe,
Figur 10 zeigt eine zweite Ausführungsform eine Kraftstoffbehälterverschlusses im Längsschnitt, mit geschlossener Klappe,
Figur 11 zeigt die zweite Ausführungsform des Kraftstoffbehälterverschlusses im Längsschnitt, mit geöffneter Klappe,
Figur 12 zeigt eine perspektivische Darstellung des Kraftstoffbehälterverschlusses der zweiten Ausführungsform.

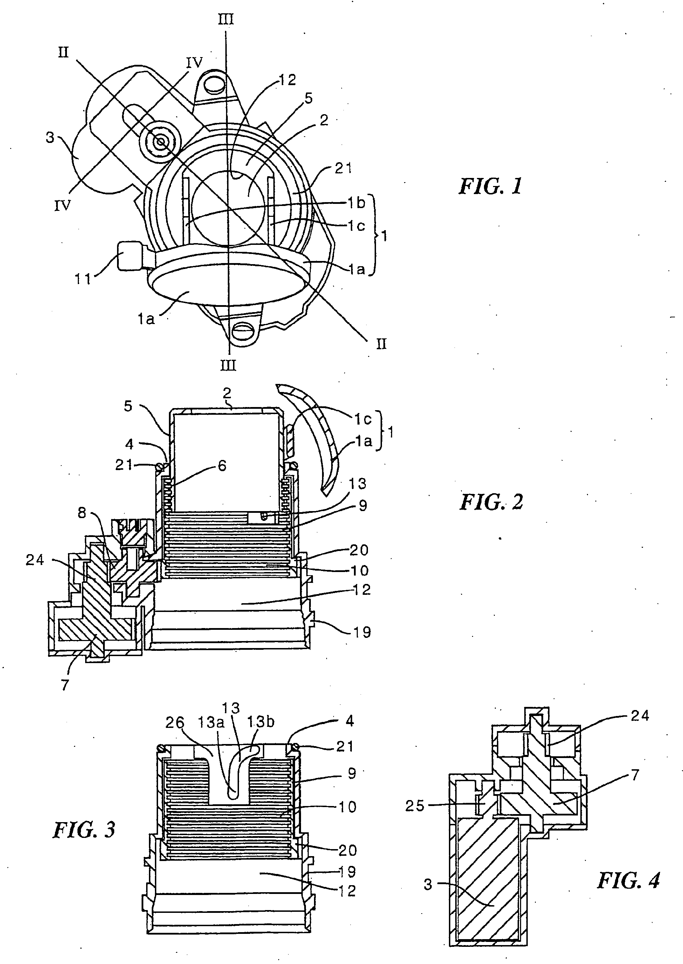

Der Kraftstoffbehälterverschluss in Figur 1 ist zur Befestigung auf einem Krafstoffeinsfüllstutzen (nicht dargestellt) eines Kraftfahrzeugs vorgesehen, um diesen dicht zu verschließen und zum Zwecke des Betankens freizugeben.

In Figur 1 ist die Öffnung 2 zu erkennen, in die eine Zapfpistole (nicht dargestellt) zur Betankung eingeführt werden kann. Zum Verschließen der Öffnung 2 dient ein Verschlussteil 1, das eine Kappe 1a und zwei an der Unterseite der Kappe befestigte parallele Streben 1b und 1c aufweist. Bei geschlossenem Einfüllkanal liegt die Kappe 1a dichtend auf einer Dichtung 21 am Rand 4 der Öffnung 2 auf. Vom Rand der Kappe 1a steht ein Vorsprung 11 ab, der im Beispiel als Rolle ausgebildet ist. Zum Öffnen und Schließen des Verschlussteils 1 dient ein Elektromotor 3, der über ein Untersetzungsgetriebe (in der Darstellung der Figur 1 nicht zu erkennen) die Kappe verschwenkt, wie nachfolgend im Detail noch erläutert wird.

Aus Figur 2, die einen Schnitt längs der Schnittlinie II-II zeigt, ist der innere Aufbau des Kraftstoffbehälterverschlusses ersichtlich. Ein im Grobumriss zylindrisches Gehäuseteil 19, das den Einfüllkanal 12 für den Kraftstoff bildet, weist an seinem oberen Rand 4 eine Dichtung 21 auf. In dem Gehäuseteil 19 ist konzentrisch ein Rohrstück 9 drehbar gelagert, das jedoch in Axialrichtung des Einfüllkanals 12 unbeweglich ist. Das Rohrstück 9 weist ein Innengewinde 10 auf. Am unteren Ende des Rohrstücks 9 befindet sich ein Außenzahnkranz 20, über den das Rohrstück 9 angetrieben werden kann, worauf es um seine Längsachse rotiert.

Innerhalb des Rohrstücks 9 ist konzentrisch zu diesem ein Schubring 5 angeordnet, der abschnittsweise ein Außengewinde 6 aufweist. Das Außengewinde 6 des Schubrings 5 greift in das Innengewinde 10 des Rohrstücks 9 ein. Der Schubring 5, der axial beweglich, jedoch infolge von Abflachungen an zwei sich gegenüberliegenden Längsseiten (vgl. Figur 1) nicht um seine Längsachse drehbar ist, wird folglich bei Drehung des Rohrstücks 9 aus dem Gehäuseteil 19 herausgefahren und bei Drehung in entgegengesetzter Richtung in das Gehäuseteil 19 eingefahren. In Figur 2 ist der Schubring 5 in seiner ausgefahrenen Position gezeigt, wobei in der Endstellung eine umlaufende Schulter des Schubrings 5 an einer Stufe des Gehäuseteils 19 anschlägt.

Anstelle des Innengewindes 10 des Rohrstücks 9 und des Außengewindes 6 des Schubrings 5 können das Rohrstück 9 und der Schubring 5 mittels einer Schraubennut auf einem der beiden Teile und einem in die Schraubennut eingreifenden Zapfen auf dem anderen der beiden Teile (nicht dargestellt) bewegungsmäßig gekoppelt werden. Eine solche Kopplung weist den Vorteil auf, dass die Schraubennut mit unterschiedlichen Steigungen ausgelegt sein kann, so dass in Phasen der Schließbewegung, in denen eine größere Kraft benötigt wird (beispielsweise gegen Ende des Schließvorgangs) die Schraubennut mit einer kleineren Steigung ausgeführt wird als in den für die übrigen Bewegungsphasen maßgeblichen Teilen der Schraubennut.

Der Rotationsantrieb des Rohrstücks 9 erfolgt über ein Untersetzungsgetriebe, das im wesentlichen aus einem Zahnrad 7, einem Zahnrad 8 und einem Zahnrad 24 besteht. Das Zahnrad 7 wird durch ein Antriebsritzel 25 eines Elektromotors 3 angetrieben (siehe Figur 4). Das mit dem Zahnrad 7 über eine starre Welle verbundene Zahnrad 24 kämmt mit dem Zahnrad 8, das wiederum mit dem Außenzahnkranz 20 des Rohrstücks 9 kämmt, um dieses in Drehung zu versetzen.

Das Zahnrad 8 kann über eine Verschlussschraube, die mit einer Kodierung ähnlich wie bei einem Radmutternschloss versehen ist, mittels eines Spezialschlüssels (nicht dargestellt) von der Gehäuseaußenseite manuell angetrieben werden, um im Falle eines Ausfalls des Elektromotors 3 den Kraftstoffbehälterverschluss öffnen zu können.

Die Übersetzungsverhältnisse in der Antriebseinheit sind so gewählt, dass beim manuellen Drehen des Zahnrades 8 einerseits der Kraftaufwand nicht zu groß wird und andererseits die Öffnung des Verschlusses mit möglichst wenigen Drehungen erfolgen kann.

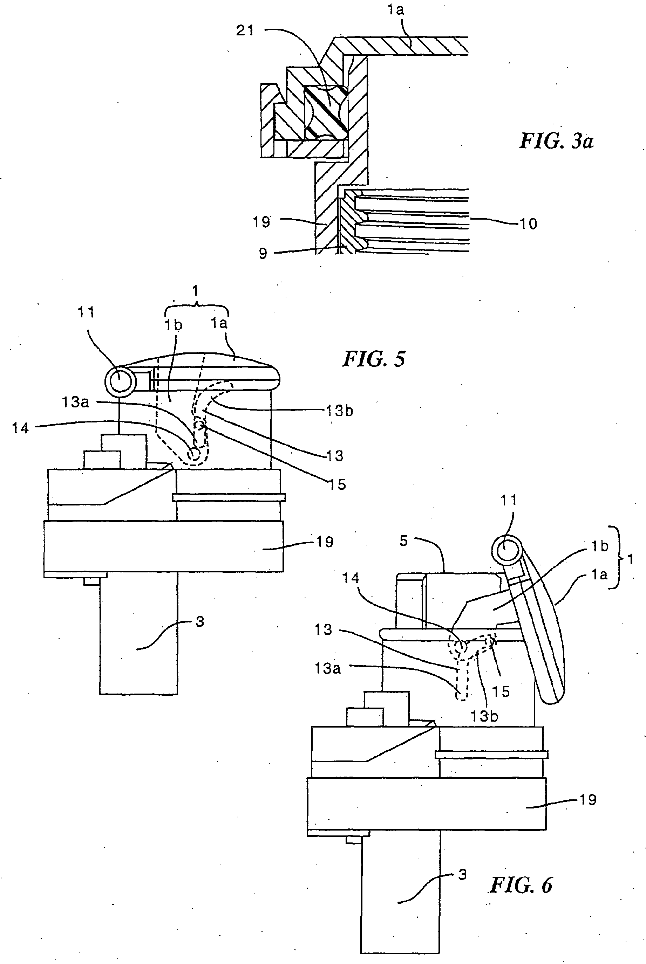

Figur 3 zeigt einen Schnitt längs der Schnittlinie III-III in Figur 1, wobei jedoch aus Gründen der Übersichtlichkeit der Darstellung einige Teile, wie beispielsweise der Schubring 5 und das Verschlussteil 1 weggelassen sind. In Figur 3 ist wiederum das zylindrische Gehäuseteil 19 zu erkennen, in dem das Rohrstück 9 angeordnet ist. Am oberen Rand des Gehäuseteils 19 ist eine Schürze 26 befestigt, die eine ebene Fläche bildet. Zwischen der Schürze 26 und der Wand des Gehäuseteils befindet sich ein Hohlraum, in dem das Rohrstück 9 liegt und unbehindert durch die Schürze 26 rotieren kann. In die ebene Fläche der Schürze 26 ist eine Nut 13 eingelassen, die die Form einer Banane aufweist. Die Nut weist einen geraden Abschnitt 13a auf, der achsparallel zum Gehäuseteil 19 verläuft. An diesen geradlinigen Teil 13a schließt sich ein gekrümmter Abschnitt 13b an. Spiegelbildlich zur Achse des Gehäuseteils 19 ist eine gleiche Schürze (in der Darstellung nicht zu sehen) mit der gleichen Nut diametral gegenüber der oben beschriebenen Schürze 26 angeordnet.

Bei der in Figur 3a gezeigte Variante ist eine Radialdichtung 21 vorgesehen. Die Radialdichtung 21 sitzt in einer Ringkammer am Innenrand der Verschlusskappe 1a,. die zur Innenseite geöffnet ist. Die Radialdichtung 21 liegt an einem zylindrischen Abschnitt des Gehäuseteils 19 an und übt dort die Dichtfunktion aus. Der Einsatz diese Dichtungsprinzips ist möglich, da das Verschlussteil 1 gegen Ende der Schließbewegung in einer in Axialrichtung verlaufenden Parallelverschiebung auf den Dichtsitz geführt wird. Die Verwendung der Radialdichtung führt zu einer zuververlässig dichten Verbindung zwischen dem Gehäusteil 19 und dem Verschlussteil 1 und stellt vor allem sicher, dass die Dichtung 21 nicht durch zu festes Andrücken im Laufe der Zeit beschädigt wird.

Figur 5 zeigt den geschlossenen Kraftstoffbehälterverschluss von der Seite. Es ist das Verschlussteil zu erkennen, das aus der Kappe 1a und zwei an der Unterseite der Kappe 1a angeordnete parallele Streben 1b und 1c besteht, von denen in Figur 5 nur die Strebe 1b zu erkennen ist. In der Nähe des unteren Endes der Strebe 1b ist ein Zapfen 14 angeordnet, der über die Fläche der Strebe 1b nach innen, d. h. auf die Mittelachse des Verschlussteils gerichtet, vorsteht. Oberhalb des Zapfens 14 befindet sich ein Zapfen 15, der über die Fläche der Strebe 1b nach außen, d.h. in der Richtung entgegen der Richtung des Zapfens 14 vorsteht. Die in der Figur nicht zu erkennende Strebe 1c ist symmetrisch zur Strebe 1b, d. h., sie weist an den entsprechenden Positionen einen nach innen und einen nach außen gerichteten Zapfen auf.

Figur 6 den Kraftstoffbehälterverschluss von der Seite wie in Figur 5, jedoch im geöffneten Zustand. In Figur 6 ist zu erkennen, dass das Verschlussteil 1 zur Seite gekippt ist, so dass der Einfüllkanal geöffnet ist. Es ist auch zu erkennen, dass der Schubring 5 aus dem Gehäuse 19 nach oben ausgefahren ist. Der Zapfen 14 der Strebe 1b des Verschlussteils 1 ist in einer Bohrung des Schubrings 5 gelagert, so dass das Verschlussteil 1 mit dem Schubring 5 gekoppelt ist, wobei jedoch das Verschlussteil 1 um eine durch den Zapfen 14 definierte Achse in Bezug auf den Schubring 5 drehbar ist. Der nach außen gerichtete Zapfen 15 greift in die Nut 13 der Schürze 26 ein, die fest mit dem Gehäuseteil 19 verbunden ist.

Der Öffnungs- und Schließvorgang wird nachfolgend anhand der Figuren 5 und 6 erläutert, wobei auch auf die Figuren 1 bis 4 Bezug genommen wird. Zum Öffnen des Kraftstoffbehälterverschlusses wird der Motor 3 angetrieben, so dass über das Untersetzungsgetriebe 7, 8 das Rohrstück 9 in Drehung versetzt wird und durch sein Gewinde 6 den Schubring axial verschiebt und zwar in Richtung nach oben, d. h. in Richtung auf die Mündung des Einfüllkanals, bis der Schubring 5 die in Figur 6 gezeigte Position einnimmt, in der er aus dem Gehäuseteil 19 vorsteht. Diese axiale Verschiebung des Schubringes 5 wird auf den Zapfen 14 des Verschlussteils, der als Kraftaufnahmeteil wirkt, übertragen. Da der nach außen gerichtete Zapfen 15 der Strebe 1b bzw. der entsprechende nach außen gerichtete Zapfen der Strebe 1c in der Nut 13 geführt ist, wird das Verschlussteil während der axialen Verschiebung des Schubringes 5 nicht nur angehoben, sondern - wie nachfolgend noch im Detail erläutert wird - auch seitlich verschwenkt. Während der Anfangsphase der Bewegung des Schubrings 5 liegt der Zapfen 15 in dem geraden, in Axialrichtung verlaufenden Abschnitt 13a der Nut 13, so dass er ebenso wie der Zapfen 14 parallel zur Längsachse des Schubrings bewegt wird. Die Folge ist eine entsprechende Parallelverschiebung des Verschlussteils 1, dessen Kappe 1a sich vom Rand der Mündung des Einfüllkanals abhebt. In dieser Phase des Öffnungsvorgangs findet noch keine Verschwenkung des Verschlußteils 1 statt. Im weiteren Fortschreiten der Bewegung des Schubrings 5 gelangt der Zapfen 15 in den gekrümmten Abschnitt 13b der Nut 13, so dass sich seine Bewegung in Axialrichtung verlangsamt und er stattdessen eine Bewegung quer zur Längsrichtung ausführt, wodurch das Verschlussteil 1 seitlich verschwenkt wird, bis es schließlich die in Figur 6 gezeigte Position einnimmt.

Der Schließvorgang vollzieht sich in umgekehrter Reihenfolge, wozu der Motor 3 in der entgegengesetzten Drehrichtung angetrieben werden muss und der Schubring 5 in das Gehäusteil 19 eingefahren wird. Dadurch wird das Verschlussteil in eine Position über der Öffnung des Einfüllkanals zurückgeschwenkt, worauf es in einer Parallelverschiebung in Axialrichtung auf die Öffnung des Einfüllkanals zurückbewegt wird. Die Kappe des Verschlussteils kann in der Endphase der Schließbewegung fest gegen die Dichtung 21 (Figur 2) gezogen werden, so dass sich ein ausreichend dichter Sitz ergibt. Die axiale Bewegung des Verschlussteils in der Endphase der Schließbewegung macht auch die Verwendung einer Radialdichtung möglich, die eine noch bessere Abdichtung gewährleistet.

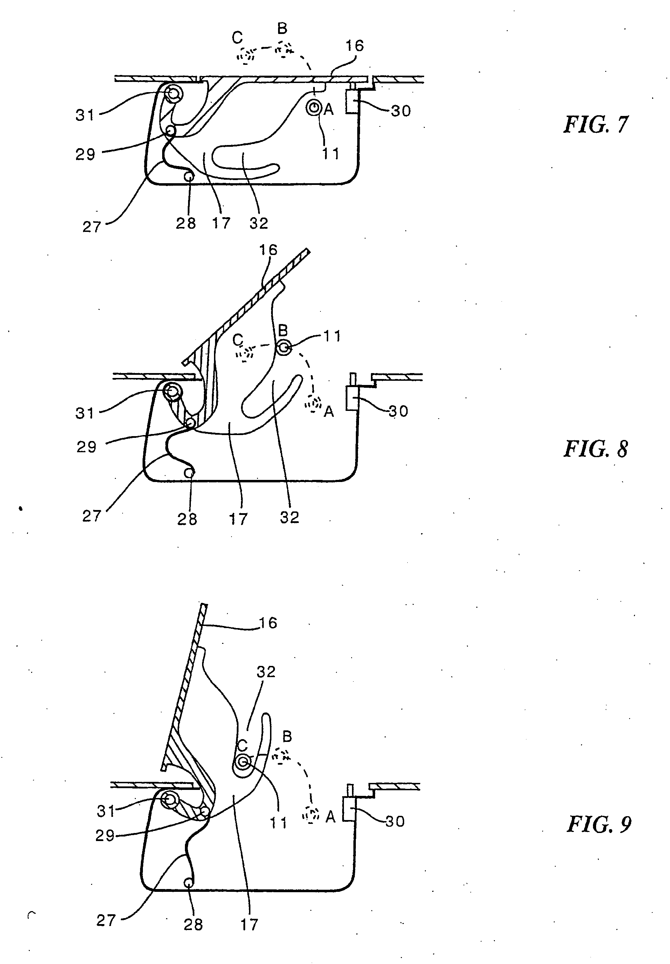

Wie sich aus einem Vergleich der Figuren 5 und 6 ergibt, bewegt sich die an der Kappe 1a des Verschlussteils 1 angeordnete Rolle 11 während der Öffnungsbewegung des Verschlussteils 1 auf einer bogenförmigen Bahn. Nachfolgend wird anhand der Figuren 7 bis 8 erläutert, wie die Bewegung der Rolle 11 zum Öffnen und Schließen einer Außenklappe eines Kraftfahrzeugs ausgenützt werden kann.

Figur 7 zeigt einen Schnitt durch den Bereich eines Kraftfahrzeugkarosserieteils, in dem der Kraftstoffeinfüllstutzen angeordnet ist. Der Kraftstoffeinfüllstutzen und der Kraftstoffbehälterschluss sind aus Gründen der Übersichtlichkeit der Darstellung nicht gezeigt. Von dem Kraftstoffeinfüllstutzen ist lediglich die Rolle 11 gezeigt, die sich auf einer bogenförmigen Bahn bewegt. Die Bahn ist strichliert eingezeichnet. Der Anfang der Bewegungsbahn (Verschluss geschlossen) ist mit "A" gekennzeichnet, "B" bezeichnet eine Zwischenposition und "C" zeigt die Lage der Rolle 11 in der Endposition.

Eine Außenklappe 16 ist über ein Gelenk 31 an der Kraftfahrzeugkarosserie angebracht. Die Aussenklappe verschließt eine Tankmulde, in der der Kraftstoffeinfüllstutzen eines Kraftfahrzeugs angeordnet ist, und wird zum Betanken geöffnet und nach dem Betanken geschlossen. Die Außenklappe ist mit einer "Übertotpunktfeder" 27 versehen. Die Übertotpunktfeder 27 ist eine Druckfeder die mit einem Ende an einem mit der Karosserie verbundenen Zapfen 28 und am entgegengesetzten Ende an einem mit der Außenklappe 16 verbundenen Zapfen 29 befestigt ist. Die Übertotpunktfeder drückt bei geschlossener Außenklappe 16 diese weiter in die Schließposition wie in Figur 1 gezeigt ist. An der Innenseite der Außenklappe 16 ist ein Kulissenprofil 17 angeordnet, das mit der Rolle 11 des Kraftstoffbehälterverschlusses zusammenwirkt. Das Kulissenprofil weist eine längliche Ausnehmung 32 auf. Der Elektromotor 3 des Kraftstoffbehälterverschlusses ist mit einem Tastschalter 30 elektrisch verbunden. Dieser ist an der Karosserie des Kraftfahrzeugs so befestigt, dass er über die Außenklappe 16 betätigt werden kann. Bei Druck gegen die Aussenklappe 16 bewegt sich diese ein wenig auf den Tastschalter 30 zu, wodurch der Tastschalter 30 betätigt und der Motor 3 so angesteuert wird, dass er den Kraftstoffbehälterverschluss öffnet. Dabei bewegt sich die Rolle 11 auf der gestrichelt gezeichneten Bahn und schlägt an dem Kulissenprofil 17 an, mit der Folge, dass die Außenklappe 16 gegen die Wirkung der Übertotpunktfeder 27 durch die Rolle 11 in die Offenposition gedrückt wird.

Figur 8 zeigt ein Zwischenstadium des Öffnungsvorganges.

Figur 9 zeigt die vollkommen geöffnete Außenklappe 16. Die Übertotpunktfeder 27 drückt nun die Außenklappe 16 in die Offenposition. Die Rolle 11 des Kraftstoffbehälterverschlusses ist nun in die Ausnehmung 32 des Kulissenprofils 17 eingelaufen, so dass sie von beiden Seiten umschlossen ist. Nach Beendigung der Betankung wird durch manuelles Drücken des Tasters 30 an eine Motorsteuerung (nicht gezeigt) ein Schließbefehl gegeben. Darauf wird der Motor 3 in Schließrichtung angetrieben. Dadurch, dass sich die Rolle 11 in der Ausnehmung 32 des Kulissenprofils 17 befindet und von beiden Seiten eingeschlossen ist, ist gewährleistet, dass die Außenklappe 16 der Bewegung der Rolle 11 folgt und sich in Schließrichtung bewegt, bis die in Figur 7 gezeigte Endposition errreicht ist, wobei in der letzten Phase der Schließbewegung die Außenklappe 16 durch die Übertotpunktfeder 27 in Richtung auf die Schließposition gedrückt wird.

Im Falle der Störung des Motors 3 kann die Außenklappe 16 von Hand geöffnet werden, da in der geschlossenen Position die Rolle 11 außerhalb der Ausnehmung 32 liegt. Danach kann mit einem Spezialschlüssel das Zahnrad 8 manuell angetrieben werden, bis der Kraftstoffbehälterverschluss geöffnet ist. Dabei wird die Außenklappe 16 durch die Übertotpunktfeder 27 in der Offenstellung gehalten. Das manuelle Schließen nach der Betankung geschieht dann in umgekehrter Bewegungsfolge.

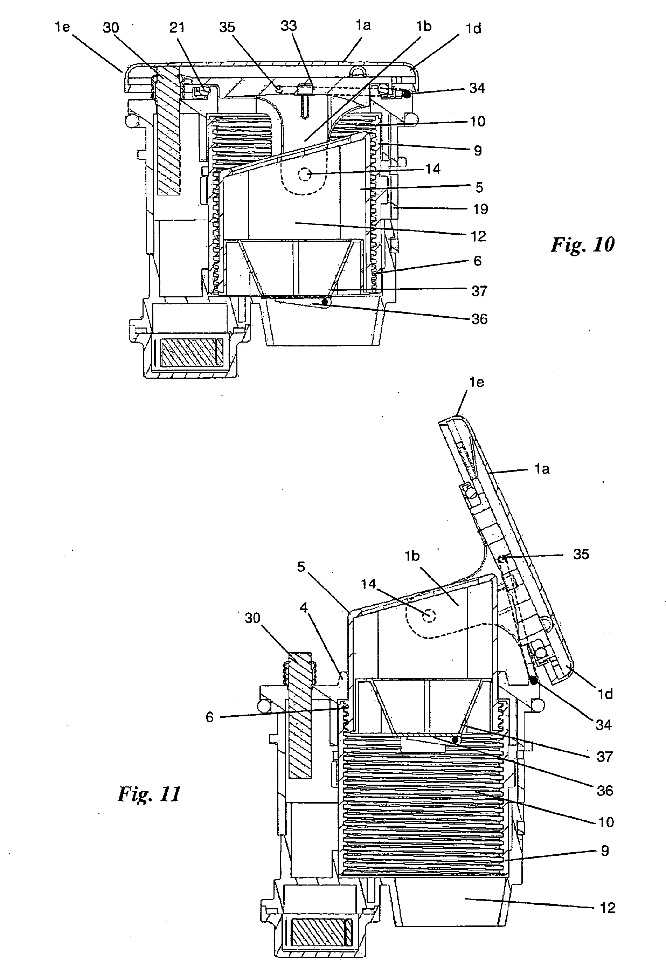

Figur 10 zeigt eine weitere Ausführungsform eines Kraftstoffbehälterverschlusses gemäß der Erfindung im Längsschnitt. Ein im Grobumriss zylindrisches Gehäuseteil 19, das den Einfüllkanal 12 für den Kraftstoff bildet, weist an seinem oberen Rand eine Dichtung 21 auf. In dem Gehäuseteil 19 ist konzentrisch ein Rohrstück 9 drehbar gelagert, das jedoch in Axialrichtung des Einfüllkanals 12 unbeweglich ist. Das Rohrstück 9 weist ein Innengewinde 10 auf. Das Rohrstück 9 wird wie im Ausführungsbeipiel der Figur 2 über eine Getriebeinheit mit einem Elektromotor angetrieben, (in der gewählten Schnittdarstellung jedoch nicht zu erkennen), worauf es um seine Längsachse rotiert.

Innerhalb des Rohrstücks 9 ist konzentrisch zu diesem ein Schubring 5 angeordnet, der abschnittsweise ein Außengewinde 6 aufweist. Das Außengewinde 6 des Schubrings 5 greift in das Innengewinde 10 des Rohrstücks 9 ein. Der Schubring 5, der an zwei sich gegenüberliegenden Längsseiten abgeflacht ist, ist axial beweglich, jedoch nicht um seine Längsachse drehbar, und wird folglich bei Drehung des Rohrstücks 9 aus dem Gehäuseteil 19 herausgefahren und bei Drehung in entgegengesetzter Richtung in das Gehäuseteil 19 eingefahren. In Figur 10 ist der Schubring 5 in seiner eingefahrenen Position gezeigt.

Anstelle des Innengewindes 10 des Rohrstücks 9 und des Außengewindes 6 des Schubrings 5 können das Rohrstück 9 und der Schubring 5 beispielsweise mittels einer Schraubennut auf einem der beiden Teile und einem in die Schraubennut eingreifenden Zapfen auf dem anderen der beiden Teile (nicht dargestellt) bewegungsmäßig gekoppelt werden. Eine solche Kopplung weist den Vorteil auf, dass die Schraubennut mit unterschiedlichen Steigungen ausgelegt sein kann, so dass in Phasen der Schließbewegung, in denen eine größere Kraft benötigt wird (beispielsweise gegen Ende des Schließvorgangs) die Schraubennut mit einer kleineren Steigung ausgeführt wird als in den für die übrigen Bewegungsphasen maßgeblichen Teilen der Schraubennut.

In Figur 10 ist das Verschlussteil zu erkennen, das die Kappe 1a und zwei an der Unterseite der Kappe 1a angeordnete parallele Streben 1b und 1c aufweist, von denen in Figur 10 nur die Strebe 1b zu erkennen ist. In der Nähe des unteren Endes der Strebe 1b ist ein Zapfen 14 angeordnet, der über die Fläche der Strebe 1b nach innen, d. h. auf die Mittelachse des Verschlussteils 1 gerichtet, vorsteht. Die in der Figur nicht zu erkennende zweite Strebe 1c ist symmetrisch zur Strebe 1b, d. h., sie weist an der entsprechenden Position ebenfalls einen nach innen gerichteten Zapfen auf.

Ein etwa U-förmiger Drahtbügel 33 ist mit seinen beiden Enden in Bohrungen 35 des Verschlussteils 1 drehbar gelagert. Die Achse der Bohrungen 35 (deren Lage nachfolgend im Zusammenhang mit Figur 11 noch deutlicher erklärt wird), liegt in der Nähe einer Durchmesserlinie des Verschlussteils 1 und ist parallel zur Achse des Zapfens 14. Der mittlere Teil des Drahtbügels 33 ist in einem Scharnier 34 gelagert, das mit dem Gehäuseteil 19 verbunden ist. Das Scharnier 34 liegt am Rand der Mündung des Einfüllkanals und definiert eine Drehachse, die parallel zur Achse der Bohrungen 35 ist, in denen die beiden Enden des Drahtbügels 33 gelagert sind. Das Verschlussteil 1 unterliegt daher einer Zwangsführung, die durch die Achse des Zapfens 14, die Achse des Scharniers 34 und die Achse der Bohrungen 35 definiert ist.

Figur 11 zeigt den Kraftstoffbehälterverschluss im geöffneten Zustand. In Figur 11 ist zu erkennen, dass das Verschlussteil 1 aufgestellt ist, so dass der Einfüllkanal geöffnet ist. Es ist auch zu erkennen, dass der Schubring 5 aus dem Gehäuse 19 nach oben ausgefahren ist. Der Zapfen 14 der Strebe 1b des Verschlussteils 1 ist in einer Bohrung des Schubrings 5 gelagert, so dass das Verschlussteil 1 mit dem Schubring 5 gekoppelt ist, wobei jedoch das Verschlussteil 1 um die durch den Zapfen 14 definierte Achse in Bezug auf den Schubring 5 drehbar ist. Bei der axialen Verschiebung des Zapfens 14 wird durch die durch die Achse des Zapfens 14, die Achse des Scharniers 34 und die Achse der Bohrungen 35 definierte Zwangsführung eine Schwenkbewegung auf das Verschlußteil 1 ausgeübt, die im Ergebnis dazu führt, dass das Verschlussteil 1 die gezeigte Lage einnimmt, in der der Einfüllkanal 12 zur Betankung freigegeben ist. Im Prinzip wirkt der Drahtbügel 33 als ein Mittel, das den Randabschnitt 1d des Verschlussteils 1 in der Nähe seiner Schließposition festhält, während das Ausfahren des Schubteils 5 bewirkt, dass der gegenüberliegende Randabschnitt 1e aufgestellt wird.

In den Figuren 10 und 11 ist ferner zu erkennen, dass im Innern des Schubteils 5 eine mit einer Klappe 36 verschließbare Blende 37 angeordnet ist, durch die gesichert wird, dass nur Zapfpistolen in den Einfüllkanal eingeführt werden können, deren Aussendurchmesser kleiner als die Öffnung der Blende 37 ist.

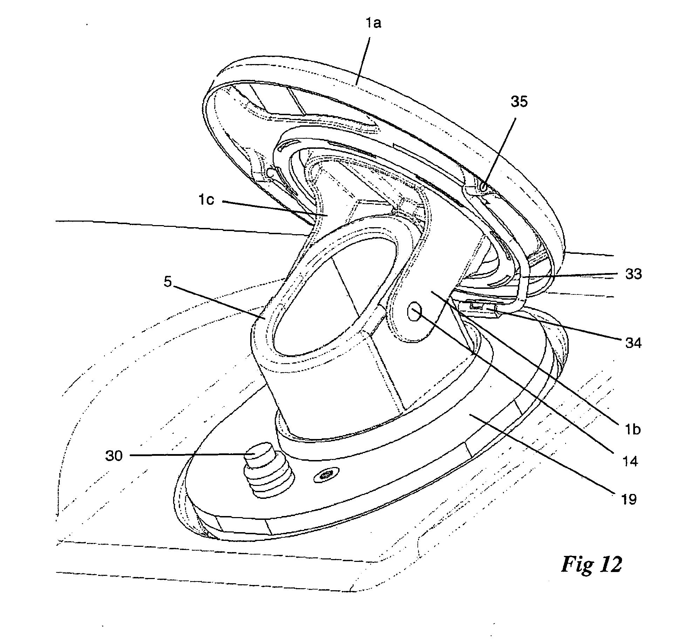

Figur 12 zeigt den Kraftstoffbehälterverschluss in perspektivischer Darstellung im geöffneten Zustand, bereit für die Betankung des Fahrzeugs.

Das Öffnen des Kraftstoffbehälterverschlusses erfolgt dadurch, dass auf die geschlossene Kappe 1a (siehe Figur 10) gedrückt wird, wodurch ein Schalter 30 betätigt und der Elektromotor (nicht zu erkennen) angetrieben wird. Dabei wird über die in der Schnittdarstellung der Figuren 10 und 11 nicht zu erkennende Antriebseinheit das Rohrstück 9 mit seinem Innnengewinde 10 in Drehung versetzt. Durch Zusammenwirken mit dem Gewinde 6 des Schubrings 5 wird dieser axial verschoben und zwar in Richtung nach oben, d. h. in Richtung auf die Mündung des Einfüllkanals, bis der Schubring 5 die in den Figuren 11 und 12 gezeigte Position einnimmt, in der er aus dem Gehäuseteil 19 vorsteht. Diese axiale Verschiebung des Schubringes 5 wird auf den Zapfen 14 des Verschlussteils, der als Kraftaufnahmeteil wirkt, übertragen. Die Zwangsführung des Verschlussteils, die durch drei Gelenke definiert wird, nämlich die Achse des Zapfens 14, die Achse des Scharniers 34 und die Achse der Bohrungen 35, bewirkt, dass die Verschlusskappe 1a in die in den Figuren 11 und 12 gezeigte Position geschwenkt wird. Zum Schließen des Kraftstoffbehälterverschlusses wird auf den nun freistehenden Schalter 30 erneut gedrückt, wodurch der Elektromotor in der entgegengesetzten Drehrichtung angetrieben wird, was zum Schließen des Kraftstoffbehälterverschlusses führt.

## Patentansprüche

1. Kraftstoffbehälterverschluss zum Verschließen eines Einfüllkanals (12) mit einem Verschlussteil (1), das zwischen einer Schließposition, in der eine Öffnung (2) des Einfüllkanals (12) dicht verschlossen ist, und einer Öffnungsposition durch eine Schwenkbewegung um eine Schwenkachse beweglich ist, wobei in der Öffnungsposition der Einfüllkanal (12) zur Befüllung eines Kraftstoffbehälters freigegeben ist und das Verschlußteil (1) durch eine einen Motor (3) aufweisende Antriebseinheit (3, 7, 8) angetrieben ist, **dadurch gekennzeichnet, dass** die Schwenkachse innerhalb des Bereichs des Einfüllkanals (12) liegt.

2. Kraftstoffbehälterverschluss zum Verschließen eines Einfüllkanals (12) mit einem Verschlussteil (1), das zwischen einer Schließposition, in der eine Öffnung (2) des Einfüllkanals (12) dicht verschlossen ist, und einer Öffnungsposition durch eine Schwenkbewegung um eine Schwenkachse beweglich ist, wobei in der Öffnungsposition der Einfüllkanal (12) zur Befüllung eines Kraftstoffbehälters freigegeben ist, und das Verschlußteil (1) durch eine einen Motor (3) aufweisende Antriebseinheit (3, 7, 8) angetrieben ist, **dadurch gekennzeichnet, dass** die Schwenkachse vor der Öffnung (2) des Einfüllkanals (12) liegt.

3. Kraftstoffbehälterverschluss nach Anspruch 1 oder Anspruch 2, **dadurch gekennzeichnet, dass** das Verschlussteil (1) in der Schließposition auf dem Rand (4) der Öffnung (2) dichtend aufsitzt und in der Öffnungsposition in Bezug auf den Einfüllkanal (12) seitlich verschwenkt ist.

4. Kraftstoffbehälterverschluss nach Anspruch 3, **dadurch gekennzeichnet, dass** das Verschlussteil (1) durch eine Zwangsführung (13, 15; 33, 34, 35) geführt ist, durch die das Verschlussteil (1) beim Öffnungsvorgang in annähernd axialer Richtung von dem Rand (4) der Öffnung (2) abhebt und anschließend um die quer zur Längsrichtung des Einfüllkanals (12) liegende Schwenkachse seitlich geschwenkt wird.

5. Kraftstoffbehälterverschluss nach Anspruch 4, **dadurch gekennzeichnet, dass** die Zwangsführung (13, 15) mindestens eine Kulissenführung ist, die zwei komplementäre Teile, nämlich einerseits mindestens eine Nut (13) und andererseits mindestens einen in die Nut (13) eingreifenden Zapfen (15) aufweist.

6. Kraftstoffbehälterverschluss nach Anspruch 5, **dadurch gekennzeichnet, dass** die Kulissenführung zwei Nuten (13) aufweist, in die jeweils Führungszapfen (15) eingreifen.

7. Kraftstoffbehälterverschluss nach Anspruch 5 oder 6, **dadurch gekennzeichnet, dass** die mindestens eine Nut (13) jeweils einen in Axialrichtung geradlinig verlaufenden Abschnitt (13a) und einen an den geradlinig verlaufenden Abschnitt (13a) anschließenden bogenförmigen Abschnitt (13b) aufweist.

8. Kraftstoffbehälterverschluss nach Anspruch 4, **dadurch gekennzeichnet, dass** die Zwangsführung Mittel (33, 34, 35) aufweist, durch die ein erster Randabschnitt (1d) des Verschlussteils (1) gelenkig in der Nähe der Position festgelegt ist, die er in der Schließposition einnimmt, während ein dem ersten Randabschnitt (1d) gegenüberliegender zweiter Randabschnitt (1e) beim Öffnen und Schließen um den ersten Randabschnitt (1d) schwenkbar ist.

9. Kraftstoffbehälterverschluss nach Anspruch 8, **dadurch gekennzeichnet, dass** die Zwangsführung ein Gelenkteil (33) aufweist, das einerseits an dem Verschlussteil (1) und andererseits an dem Gehäuseteil (19) angelenkt ist.

10. Kraftstoffbehälterverschluss nach Anspruch 9, **dadurch gekennzeichnet, dass** das Gelenkteil (33) als Drahtbügel ausgeführt ist, der einerseits in einem an dem Gehäuseteil (19) angeordneten Scharnier (34) gelagert und andererseits in mindestens einer an dem Verschlussteil (1) angeordneten Bohrung (35) gelagert ist, wobei die Achsen des Scharniers (34) und der mindestens einen Bohrung (35) parallel sind.

11. Kraftstoffbehälterverschluss nach einem der vorhergehenden Ansprüche, **dadurch gekennzeichnet, dass** das Verschlußteil (1) eine auf den Rand (4) der Öffnung passende Kappe (1a) und zwei seitlich an der Kappe (1a) angeordnete Streben (1b, 1c) aufweist.

12. Kraftstoffbehälterverschluss nach Anspruch 11, **dadurch gekennzeichnet, dass** an der Strebe oder an den Streben (1b, 1c) ein Kraftaufnahmeteil (14) angeordnet ist, auf das Kräfte in Axialrichtung zum Schließen und Öffnen des Kraftstoffbehälterverschlusses ausübbar sind.

13. Kraftstoffbehälterverschluss nach Anspruch 12, **dadurch gekennzeichnet, dass** das Kraftaufnahmeteil (14) mit einem axial beweglichen Schubring (5) gekoppelt ist.

14. Kraftstoffbehälterverschluss nach Anspruch 13, **dadurch gekennzeichnet, dass** das Kraftaufnahmeteil als Zapfen (14) ausgebildet ist, der in eine Ausnehmung des axial beweglichen Schubringes (5) eingreift, derart dass das Verschlussteil (1) schwenkbar an dem Schubring (5) angelenkt ist.

15. Kraftstoffbehälterverschluss nach Anspruch 13 oder 14, **dadurch gekennzeichnet, dass** der Schubring (5) ein Gewinde (6) aufweist, derart dass er in axialer Richtung bewegbar ist.

16. Kraftstoffbehälterverschluss nach einem der vorhergehenden Ansprüche, **dadurch gekennzeichnet, dass** der Motor (3) ein Elektromotor ist.

17. Kraftstoffbehälterverschluss nach einem der vorhergehenden Ansprüche, **dadurch gekennzeichnet, dass** die Antriebseinheit ein Untersetzungsgetriebe (7, 8) aufweist.

18. Kraftstoffbehälterverschluss nach Anspruch 17, **dadurch gekennzeichnet, dass** die Antriebseinheit (7, 8) ein von außen mit einem Schlüssel antreibbares Zahnrad (8) aufweist.

19. Kraftstoffbehälterverschluss nach einem der vorhergehenden Ansprüche, **dadurch gekennzeichnet, dass** der Motor (3) eine parallel zu der Achse des Einfüllkanals (12) liegende Antriebswelle aufweist.

20. Kraftstoffbehälterverschluss nach einem der vorhergehenden Ansprüche, **dadurch gekennzeichnet, dass** die Antriebseinheit (3, 7, 8) ein mit einem Gewinde (10) versehenes, um seine Längsachse drehbares Rohrstück (9) antreibt, das den Schubring (5) umgibt und mit einem Gewinde (6) des Schubrings (5) zusammenwirkt, um den Schubring (5) in axialer Richtung zu bewegen.

21. Kraftstoffbehälterverschluss nach einem der vorhergehenden Ansprüche, **dadurch gekennzeichnet, dass** das Verschlussteil (1) mit einer Karosserie- Außenklappe (16) derart verbunden ist, dass beim Öffnen des Verschlussteils (1) die Außenklappe (16) ebenfalls geöffnet wird.

22. Kraftstoffbehälterverschluss nach einem der vorhergehenden Ansprüche**, dadurch gekennzeichnet, dass** das Verschlussteil (1) mit einer Karosserie- Außenklappe (16) derart verbunden ist, dass beim Schließen des Verschlussteils (1) die Außenklappe (16) ebenfalls geschlossen wird.

23. Kraftstoffbehälterverschluss nach einem der vorhergehenden Ansprüche, **dadurch gekennzeichnet, dass** das Verschlussteil (1) einen in ein Kulissenprofil (17) der Außenklappe (16) eingreifenden Vorsprung (11) aufweist.

24. Kraftstoffbehälterverschluss nach einem der vorhergehenden Ansprüche, **dadurch gekennzeichnet, dass** die Außenklappe (16) einen elektrischen Taster (30) aufweist, durch dessen Betätigung der Motor (3) ein- und ausgeschaltet wird.

25. Kraftstoffbehälterverschluss nach Anspruch 24, **dadurch gekennzeichnet, dass** der Taster (30) mit einer Zentralverriegelung gekoppelt ist.

26. Kraftstoffbehälterverschluss nach Anspruch 24 oder 25, **dadurch gekennzeichnet, dass** der Taster (30) so angeordnet ist, dass er durch Druck auf die geschlossene Außenklappe betätigbar ist.

27. Kraftstoffbehälterverschluss nach einem der vorhergehenden Ansprüche, **dadurch gekennzeichnet, dass** der Motor (3) durch eine Fernbedienung gesteuert wird.

28. Kraftstoffbehälterverschluss nach einem der vorhergehenden Ansprüche, **dadurch gekennzeichnet, dass** der Motor (3) durch einen Schalter im Fahrzeuginnern gesteuert wird.

29. Kraftstoffbehälterverschluss nach einem der vorhergehenden Ansprüche, **dadurch gekennzeichnet, dass** in dem Einfüllkanal (12) eine mit einer Klappe (36) verschließbare Blende (37) angeordnet ist, durch die die in den Einfüllkanal einführbaren Zapfpistolen in bezug auf ihren Durchmesser begrenzt sind.

30. Kraftstoffbehälterverschluss nach Anspruch 29, **dadurch gekennzeichnet, dass** die mit der Klappe (36) verschließbare Blende (37) in dem Schubring (5) angeordnet ist.

## Claims

1. Fuel tank closure for closing a filling conduit (12) with a closure part (1), which is movable by a pivoting movement around a pivot axis between a closing position, in which an opening (2) of the filling conduit (12) is tightly closed, and an opening position, wherein in the opening position the filling conduit (12) is free for filling a fuel tank, and the closure part (1) is driven by a drive unit (3, 7, 8) having a motor (3), **characterised in that** the pivot axis lies within the region of the filling conduit (12).

2. Fuel tank closure for closing a filling conduit (12) with a closure part (1), which is movable by a pivoting movement around a pivot axis between a closing position, in which an opening (2) of the filling conduit (12) is tightly closed, and an opening position, wherein in the opening position the filling conduit (12) is free for filling a fuel tank, and the closure part (1) is driven by a drive unit (3, 7, 8) having a motor (3), **characterised in that** the pivot axis lies in front of the opening (2) of the filling conduit (12).

3. Fuel tank closure according to claim 1 or claim 2, **characterised in that** in the closing position the closure part (1) sits on the edge (4) of the opening (2) to provide a seal and in the opening position is pivoted laterally relative to the filling conduit (12).

4. Fuel tank closure according to claim 3, **characterised in that** the closure part (1) is guided by a forced guide means (13, 15; 33, 34, 35), by means of which during the opening process the closure part (1) is raised approximately in the axial direction from the edge (4) of the opening (2) and is then pivoted laterally around the pivot axis lying transversely to the longitudinal direction of the filling conduit (12).

5. Fuel tank closure according to claim 4, **characterised in that** the forced guide means (13, 15) is at least one connecting link guide, which has two complementary parts, namely at least one groove (13) on one side and at least one pin (15) engaging into the groove (13) on the other side.

6. Fuel tank closure according to claim 5, **characterised in that** the connecting link guide has two grooves (13), into which guide pins (15) respectively engage.

7. Fuel tank closure according to claim 5 or 6, **characterised in that** the at least one groove (13) respectively has a section (13a) extending rectilinearly in axial direction and an arc-shaped section (13b) adjoining the rectilinearly extending section (13a).

8. Fuel tank closure according to claim 4, **characterised in that** the forced guide means has elements (33, 34, 35), by means of which a first edge section (1d) of the closure part (1) is articulated in the vicinity of the position it assumes in the closing position, whereas a second edge section (1e) located opposite the first edge section (1d) can be pivoted around the first edge section (1d) during opening and closing.

9. Fuel tank closure according to claim 8, **characterised in that** the forced guide means has a link part (33), which is articulated on one side to the closure part (1) and on the other side to the housing part (19).

10. Fuel tank closure according to claim 9, **characterised in that** the link part (33) is configured as a wire bow, which is disposed on one side in a hinge (34) arranged on the housing part (19) and on the other side in at least one bore (35) provided on the closure part (1), wherein the axes of the hinge (34) and the at least one bore (35) are parallel.

11. Fuel tank closure according to one of the preceding claims, **characterised in that** the closure part (1) has a cap (1a) fitting onto the edge (4) of the opening and two struts (1b, 1c) arranged laterally on the cap (1a).

12. Fuel tank closure according to claim 11, **characterised in that** a force absorbing part (14) is arranged on the strut or on the struts (1b, 1c), onto which force absorbing part forces can be exerted in axial direction to close and open the fuel tank closure.

13. Fuel tank closure according to claim 12, **characterised in that** the force absorbing part (14) is coupled to an axially movable slide ring (5).

14. Fuel tank closure according to claim 13, **characterised in that** the force absorbing part is configured as a pin (14), which engages into a recess of the axially movable slide ring (5) such that the closure part (1) is articulated to pivot on the slide ring (5).

15. Fuel tank closure according to claim 13 or 14, **characterised in that** the slide ring (5) has a thread (6) so that it is movable in axial direction.

16. Fuel tank closure according to one of the preceding claims, **characterised in that** the motor (3) is an electric motor.

17. Fuel tank closure according to one of the preceding claims, **characterised in that** the drive unit has a reduction gear (7, 8).

18. Fuel tank closure according to claim 17, **characterised in that** the drive unit (7, 8) has a gear wheel (8), which can be driven from the outside by a key.

19. Fuel tank closure according to one of the preceding claims, **characterised in that** the motor (3) has a drive shaft lying parallel to the axis of the filling conduit (12).

20. Fuel tank closure according to one of the preceding claims, **characterised in that** the drive unit (3, 7, 8) drives a length of pipe (9), which is provided with a thread (10), is rotatable around its longitudinal axis and surrounds the slide ring (5) and which cooperates with a thread (6) of the slide ring (5) in order to move the slide ring (5) in axial direction.

21. Fuel tank closure according to one of the preceding claims, **characterised in that** the closure part (1) is connected to an outer flap (16) on the vehicle body in such a way that when the closure part (1) is opened the outer flap (16) is likewise opened.

22. Fuel tank closure according to one of the preceding claims, **characterised in that** the closure part (1) is connected to an outer flap (16) on the vehicle body in such a way that when the closure part (1) is closed the outer flap (16) is likewise closed.

23. Fuel tank closure according to one of the preceding claims, **characterised in that** the closure part (1) has a projection (11) engaging into a connecting link profile (17) of the outer flap (16).

24. Fuel tank closure according to one of the preceding claims, **characterised in that** the outer flap (16) has an electric switch (30), which when actuated switches the motor (3) on and off.

25. Fuel tank closure according to claim 24, **characterised in that** the switch (30) is coupled with a central locking system.

26. Fuel tank closure according to claim 24 or 25, **characterised in that** the switch (30) is arranged so that it can be actuated by pressure on the closed outer flap.

27. Fuel tank closure according to one of the preceding claims, **characterised in that** the motor (3) is controlled by a remote control.

28. Fuel tank closure according to one of the preceding claims, **characterised in that** the motor (3) is controlled by a switch in the vehicle interior.

29. Fuel tank closure according to one of the preceding claims, **characterised in that** an orifice member (37) closable with a flap (36) is arranged in the filling conduit (12), by means of which orifice member the fuel nozzles that can be inserted into the filling conduit (12) are restricted with respect to their diameter.

30. Fuel tank closure according to claim 29, **characterised in that** the orifice member (37) closable with the flap (36) is arranged in the slide ring (5).

## Revendications

1. Obturateur de réservoir de carburant pour la fermeture d'un canal de remplissage (12) avec un élément de fermeture (1) qui est mobile entre une position de fermeture, dans laquelle une ouverture (2) du canal de remplissage (12) est fermée de manière étanche, et une position d'ouverture par un mouvement de pivotement autour d'un axe de pivotement, dans lequel dans la position d'ouverture, le canal de remplissage (12) est libéré pour le remplissage d'un réservoir de carburant et l'élément de fermeture (1) est entraîné par une unité d'entraînement (3, 7, 8) présentant un moteur (3), **caractérisé en ce que** l'axe de pivotement se trouve à l'intérieur de la zone du canal de remplissage (12).

2. Obturateur de réservoir de carburant pour la fermeture d'un canal de remplissage (12) avec un élément de fermeture (1) qui est mobile entre une position de fermeture, dans laquelle une ouverture (2) du canal de remplissage (12) est fermée de manière étanche, et une position d'ouverture par un mouvement de pivotement autour d'un axe de pivotement, dans lequel dans la position d'ouverture, le canal de remplissage (12) est libéré pour le remplissage d'un réservoir de carburant et l'élément de fermeture (1) est entraîné par une unité d'entraînement (3, 7, 8) présentant un moteur (3), **caractérisé en ce que** l'axe de pivotement se trouve avant l'ouverture (2) du canal de remplissage (12).

3. Obturateur de réservoir de carburant selon la revendication 1 ou la revendication 2, **caractérisé en ce que** l'élément de fermeture (1) repose de manière étanche dans la position de fermeture sur le bord (4) de l'ouverture (2) et est pivoté latéralement dans la position d'ouverture par rapport au canal de remplissage (12).

4. Obturateur de réservoir de carburant selon la revendication 3, **caractérisé en ce que** l'élément de fermeture (1) est guidé par un guidage forcé (13, 15 ; 33, 34, 35), par lequel l'élément de fermeture (1) est soulevé lors du processus d'ouverture dans le sens approximativement radial du bord (4) de l'ouverture (2) et est ensuite pivoté latéralement autour de l'axe de pivotement se trouvant transversalement au sens longitudinal du canal de remplissage (12).

5. Obturateur de réservoir de carburant selon la revendication 4, **caractérisé en ce que** le guidage forcé (13, 15) est au moins un guide à coulisse qui présente deux éléments complémentaires, à savoir d'une part au moins une rainure (13) et d'autre part au moins un tenon (15) s'engageant dans la rainure (13).

6. Obturateur de réservoir de carburant selon la revendication 5, **caractérisé en ce que** le guide à coulisse présente deux rainures (13), dans lesquelles s'engagent respectivement des tenons de guidage (15).

7. Obturateur de réservoir de carburant selon la revendication 5 ou 6, **caractérisé en ce que** l'au moins une rainure (13) présente respectivement une partie (13a) s'étendant en ligne droite dans le sens axial et une partie (13b) coudée, contiguë à la partie (13a) s'étendant en ligne droite.

8. Obturateur de réservoir de carburant selon la revendication 4, **caractérisé en ce que** le guidage forcé présente des moyens (33, 34, 35), par lesquels une première partie de bord (1d) de l'élément de fermeture (1) est fixée de manière articulée à proximité de la position qu'elle occupe dans la position de fermeture, alors qu'une seconde partie de bord (1e) opposée à la première partie de bord (1d) est pivotante lors de l'ouverture et de la fermeture autour de la première partie de bord (1d).

9. Obturateur de réservoir de carburant selon la revendication 8, **caractérisé en ce que** le guidage forcé présente un élément articulé (33) qui est articulé d'une part au niveau de l'élément de fermeture (1) et d'autre part au niveau de l'élément de boîtier (19).

10. Obturateur de réservoir de carburant selon la revendication 9, **caractérisé en ce que** l'élément articulé (33) est réalisé comme un étrier métallique qui est logé d'une part dans une charnière (34) disposée sur l'élément de boîtier (19) et d'autre part dans au moins un perçage (35) disposé sur l'élément de fermeture (1), les axes de la charnière (34) et de l'au moins un perçage (35) étant parallèles.

11. Obturateur de réservoir de carburant selon l'une quelconque des revendications précédentes, **caractérisé en ce que** l'élément de fermeture (1) présente un capuchon (1a) adapté au bord (4) de l'ouverture et deux traverses (1b, 1c) disposées latéralement sur le capuchon (1a).

12. Obturateur de réservoir de carburant selon la revendication 11, **caractérisé en ce que** sur la traverse ou sur les traverses (1b, 1c) est disposé un élément de réception de forces (14), sur lequel des forces peuvent être exercées dans le sens axial pour la fermeture et l'ouverture de l'obturateur de réservoir de carburant.

13. Obturateur de réservoir de carburant selon la revendication 12, **caractérisé en ce que** l'élément de réception de forces (14) est couplé à une bague de poussée (5) mobile axialement.

14. Obturateur de réservoir de carburant selon la revendication 13, **caractérisé en ce que** l'élément de réception de forces est réalisé comme un tenon (14) qui s'engage dans un évidement de la bague de poussée (5) mobile axialement de sorte que l'élément de fermeture (1) soit articulé de manière pivotante au niveau de la bague de poussée (5).

15. Obturateur de réservoir de carburant selon la revendication 13 ou 14, **caractérisé en ce que** la bague de poussée (5) présente un filetage (6) de sorte qu'elle soit mobile dans le sens axial.

16. Obturateur de réservoir de carburant selon l'une quelconque des revendications précédentes, **caractérisé en ce que** le moteur (3) est un moteur électrique.

17. Obturateur de réservoir de carburant selon l'une quelconque des revendications précédentes, **caractérisé en ce que** l'unité d'entraînement présente un réducteur (7, 8).

18. Obturateur de réservoir de carburant selon la revendication 17, **caractérisé en ce que** l'unité d'entraînement (7, 8) présente une roue dentée (8) pouvant être entraînée de l'extérieur avec une clé.

19. Obturateur de réservoir de carburant selon l'une quelconque des revendications précédentes, **caractérisé en ce que** le moteur (3) présente un arbre d'entraînement se trouvant parallèlement à l'axe du canal de remplissage (12).

20. Obturateur de réservoir de carburant selon l'une quelconque des revendications précédentes, **caractérisé en ce que** l'unité d'entraînement (3, 7, 8) entraîne un élément tubulaire (9) rotatif autour de son axe longitudinal, pourvu d'un filetage (10), qui entoure la bague de poussée (5) et coopère avec un filetage (6) de la bague de poussée (5) afin de déplacer la bague de poussée (5) dans le sens axial.

21. Obturateur de réservoir de carburant selon l'une quelconque des revendications précédentes, **caractérisé en ce que** l'élément de fermeture (1) est relié à un volet extérieur de carrosserie (16) de sorte que lors de l'ouverture de l'élément de fermeture (1), le volet extérieur (16) soit également ouvert.

22. Obturateur de réservoir de carburant selon l'une quelconque des revendications précédentes, **caractérisé en ce que** l'élément de fermeture (1) est relié à un volet extérieur de carrosserie (16) de sorte que lors de la fermeture de l'élément de fermeture (1), le volet extérieur (16) soit également fermé.

23. Obturateur de réservoir de carburant selon l'une quelconque des revendications précédentes, **caractérisé en ce que** l'élément de fermeture (1) présente une saillie (11) s'engageant dans un profilé à coulisse (17) du volet extérieur (16).

24. Obturateur de réservoir de carburant selon l'une quelconque des revendications précédentes, **caractérisé en ce que** le volet extérieur (16) présente un bouton-poussoir (30) électrique, par l'actionnement duquel le moteur (3) est mis en et hors service.

25. Obturateur de réservoir de carburant selon la revendication 24, **caractérisé en ce que** le bouton-poussoir (30) est couplé à un verrouillage central.

26. Obturateur de réservoir de carburant selon la revendication 24 ou 25, **caractérisé en ce que** le bouton-poussoir (30) est disposé de sorte à pouvoir être actionné par pression sur le volet extérieur fermé.

27. Obturateur de réservoir de carburant selon l'une quelconque des revendications précédentes, **caractérisé en ce que** le moteur (3) est commandé par une télécommande.

28. Obturateur de réservoir de carburant selon l'une quelconque des revendications précédentes, **caractérisé en ce que** le moteur (3) est commandé par un commutateur à l'intérieur du véhicule.

29. Obturateur de réservoir de carburant selon l'une quelconque des revendications précédentes, **caractérisé en ce que** dans le canal de remplissage (12) est disposé un étranglement (37) pouvant être fermé avec un volet (36), par lequel les pistolets pouvant être introduits dans le canal de remplissage sont limités en ce qui concerne leur diamètre.

30. Obturateur de réservoir de carburant selon la revendication 29, **caractérisé en ce que** l'étranglement (37) pouvant être fermé avec le volet (36) est disposé dans la bague de poussée (5).
